# EUROPÄISCHE PATENTANMELDUNG

(11) **EP 0 551 900 A2**
(43) Veröffentlichungstag der Anmeldung: **21.07.1993**
(21) Anmeldenummer: 93100479.0
(22) Anmeldetag: 14.01.1993
(51) Int. Cl.: B65D 85/78, B65D 25/16, B65D 77/02, A23G 9/00, A23G 9/14, A23G 9/22, B65B 3/02

(54) **Umhüllung für einen Speiseeisblock und Verfahren zum Bereitstellen von Speiseeis an einer Entnahmestelle bei Verwendung einer solchen Umhüllung**

(30) Priorität: 14.01.1992 DE 9200354 U
(71) Anmelder: Schöller Lebensmittel GmbH & Co. KG, D-90419 Nürnberg (DE)
(72) Erfinder: Beer, Richard, W-8500 Nürnberg (DE)
(74) Vertreter: Körber, Wolfhart, Dr.rer.nat.

(57) **Zusammenfassung**

Die Erfindung betrifft eine Umhüllung für einen Speiseeisblock (5), der in Form einer flüssigen oder teilflüssigen Ausgangsmasse in eine Hohlform eingefüllt und durch Gefrieren zur Blockform erstarrt ist. Die bisher aus einer Kunststoffwanne und einer äußeren Verpackung bestehende Umhüllung umfaßt erfindungsgemäß zum Zwecke der Vereinfachung eine Auskleidung (9) für die Hohlform (4) mit einem solchen Zuschnitt und bestehend aus einem schmiegsamen und wasserfesten Flachmaterial mit einer solchen Festigkeit, daß sie in die Hohlform faltenfrei einlegbar ist und nach dem Erstarren der Ausgangsmasse den Speiseeisblock faltenfrei umhüllt. Die Erfindung betrifft ferner ein Verfahren, mit dem unter Verwendung der Umhüllung Speiseeis an einer Entnahmestelle bereitgestellt wird.

## Beschreibung

Die Erfindung bezieht sich auf eine Umhüllung und ein Verfahren nach dem Oberbegriff des Anspruchs 1 bzw. 18.

Bei Speiseeis ist zwecks Gewährleistung der Haltbarkeit auf dem Transportweg zwischen Hersteller und Verkäufer eine Tiefgefrierung erforderlich. Dies erfolgt in Blöcken, die, mit einer Verpackung versehen, vom Hersteller zum Verkäufer transportiert werden.

Es ist bisher üblich, die Speiseeis-Ausgangsmasse in eine Kunststoffwanne zu füllen, zu gefrieren und in dieser Wanne unter Aufrechterhaltung der Tiefkühlung, z.B. in sogenannten Eiswagen, zum Verkäufer zu transportieren. Hierbei handelt es sich zum Beispiel um eine Eisdiele bzw. ein Eiskaffee oder einen gegebenenfalls mobilen Eisstand. Am hierdurch vorgegebenen Verkaufsort ist der Eisblock einer Entnahmestelle zu übergeben, an der das Speiseeis portioniert und verkauft wird. Eine solche Entnahmestelle ist in den meisten Fällen eine Verkaufstheke, in der das Speiseeis aus einer Verkaufswanne herausportioniert und verkauft wird. Eine solche Verkaufswanne soll zum einen einen sauberen und hygienischen und zum anderen einen ästhetischen, ansprechenden Eindruck beim Kunden machen, und deshalb wird sie aus glänzendem Metall, vorzugsweise Edelstahl, wie V2A, hergestellt. In einer Eistheke befinden sich je nach Größe des Angebots an unterschiedlichen Geschmackssorten mehrere solcher Verkaufswannen.

Es ist üblich, beim Verfahren zur Bereitstellung des Speiseeises beim Verkäufer folgendermaßen vorzugehen. Beim Hersteller wird die Speiseeis-Ausgangsmasse in die Kunststoffwanne gefüllt, deren Form und Abmessung so angepaßt ist, daß sie in die Verkaufswanne des Verkäufers eingesetzt werden kann. Nach dem Einfüllen der Ausgangsmasse wird letztere in der Kunststoffwanne beim Durchlaufen eines Tunnel-Gefrierers tiefgefroren, und in einer Verpackung verpackt, die gemeinsam mit der Kunststoffwanne eine den Speiseeisblock allseits umgebende Umhüllung darstellt. Sodann erfolgt nach einer Zwischenlagerung, falls erforderlich, der Transport und zum Verkäufer. Bei diesem wird die Kunststoffwanne mit dem darin befindlichen Speiseeis nach dem Entfernen der Verpackung in die betreffende metallene Verkaufswanne eingestellt. Danach kann die Portionierung und der Verkauf des Speiseeises erfolgen. Diese bekannte Verfahrensweise ist aus mehreren Gründen nachteilig. Zum einen vermittelt die Kunststoffwanne keinen hygienischen und sauberen sowie ästhetisch ansprechenden Eindruck. Zum anderen vermag der Kunde aufgrund des Vorhandenseins der Kunststoffwanne zu erkennen, daß das Speiseeis nicht an Ort und Stelle hergestellt, sondern ein Bezugsartikel ist; außerdem besteht das Problem der Entsorgung der Kunststoffwanne nach deren Entleerung. Sofern eine Rücksendung an die Hersteller nicht lohnend ist, müssen die Kunststoffwannen entsorgt werden, wodurch ein bedeutender Materialverlust entsteht. Aber auch die Rücksendung ist mit einem erheblichen Aufwand verbunden.Gleiches gilt für die früher anstelle der Kunststoffwannen erfolgter Verwendung der Edelstahl-Verkaufswannen sowohl für den Transport als auch als Verkaufsbehälter. Die Wannen sind wegen der starken Konizität der Hohlform nicht stapelbar, müssen mit erheblichem Aufwand zurückgesandt und für eine Wiederverwendung gereinigt werden.

Der Erfindung liegt die Aufgabe zugrunde, eine Umhüllung der eingangs genannten Art zu vereinfachen und ein entsprechendes Verfahren bereitzustellen.

Diese Aufgabe wird hinsichtlich der Umhüllung durch die Merkmale des Anspruchs 1 und hinsichtlich des Verfahrens durch die Merkmale des Anspruchs 18 gelöst.

Mit der Erfindung entfallen die Kunststoffwanne und die Verpackung, die im Stand der Technik zur vollständigen Umhüllung des Speiseeisblocks erforderlich sind. Statt dessen dient die Auskleidung als Schutz des Speiseeisblocks während des Transport zur Entnahmestelle und kann entsprechend ihrer Haftung zur Hohlform und zum Speiseeisblock zusammen mit letzterem leicht aus ersterem entfernt und an der Entnahmestelle leicht vom Speiseeisblock gelöst werden. Letzterer kann sodann aufgrund entsprechender Abmessungen in die Verkaufswanne eingesetzt und zum Verkauf angeboten werden. Dabei wird dem Kunden der Eindruck vermittelt, daß das Eis an Ort und Stelle frisch hergestellt worden ist. Die metallene Verkaufswanne ist außerdem hygienisch und sieht gut aus.

Die Auskleidung kann aufgrund ihres Zuschnitts sowie der Festigkeit des schmiegsamen und wasserfesten Flachmaterials, aus dem sie besteht, faltenfrei in die Hohlform eingelegt werden, so daß sie nach dem Erstarren der eingefüllten Ausgangsmasse den Speiseeisblock faltenfrei umhüllt und somit sehr leicht von diesem entfernt werden kann.

Die Auskleidung kann einlagig, beispielsweise aus Kunststoff-Folienmaterial oder Papier, wie etwa Wachs- oder Perlwachspapier, vorzugsweise jedoch mehrlagig hergestellt sein. Im letzteren Fall besteht sie vorteilhafterweise aus wenigstens einer wasserfesten Innenlage sowie einer festigkeitsgebenden Außenlage. Letztere kann aus Karton oder Pappe bestehen, während für die Innenlage Polyäthylen in Form einer Beschichtung der Außenlage verwendet werden kann. Gemäß einer Weiterbildung der Erfindung ist die für den Kontakt mit der Ausgangsmasse bzw. dem Speiseeisblock vorgesehene Seite der Auskleidung glatt, so daß sie leicht vom Speiseeisblock entfernt werden kann. Für diesen Zweck sowie für die faltenfreie Handhabung beim Einlegen in die Hohlform sowie während des Einfüllens und Erstarrens der Ausgangsmasse ist es günstig, wenn die Auskleidung ein Gewicht im Bereich von etwa 250 g/m² bis etwa 450 g/m²s vorzugsweise etwa 350 g/m² aufweist. Dabei kann die Dicke der Auskleidung etwa 0,35mm bis etwa 0,65mm, vorzugsweise etwa 0,5mm und diejenige der Innenlage etwa 0,03mm bis etwa 1,0mm, vorzugsweise etwa 0,5mm, betragen.

Die Auskleidung ist vorzugsweise als einstückiger Zuschnitt ausgebildet und kann zur Abdeckung der Oberseite der Ausgangsmasse in der Hohlform oder des Speiseeisblocks einen Deckelzuschnittsbereich aufweisen, der in Form und Größe an die horizontale Querschnittsform und -größe der Hohlform angepaßt oder bzgl. seiner Länge und/oder Breite etwas größer bemessen ist, um den Speiseeisblock allseits zu umhüllen.

Es ist jedoch auch möglich, den Deckelzuschnittsbereich als separates Teil herzustellen und separat auf die Ausgangsmasse oder den Speiseeisblock aufzulegen.

Gemäß einer Weiterbildung der Erfindung ist der mit der Auskleidung umhüllte Speiseeisblock für den Transport zur Entnahmestelle in einer Verpackung verpackt.

Weitere Merkmale und Vorteile der Erfindung ergeben sich aus den verbleibenden Unteransprüchen.

Nachfolgend ist die Erfindung anhand eines bevorzugten Ausführungsbeispiels unter Bezugnahme auf die Zeichnung näher beschrieben. Es zeigen
**Fig. 1A bis 1F** schematisch mehrere Verfahrensschritte eines bevorzugten Ausführungsbeispiels des erfindungsgemäßen Verfahrens zum Bereitstellen eines Speiseeisblocks an einer Entnahmestelle,
**Fig. 2** den Speiseeisblock nach den vorhergehenden Figuren in der Draufsicht,
**Fig. 3** eine für das erfindungsgemäße Verfahren erforderliche Auskleidung in Form eines Zuschnitts in der Draufsicht,
**Fig. 4** ein Zuschnitts-Ergänzungsteil der Auskleidung in der Draufsicht, und
**Fig. 5** ein Teilstück der Auskleidung in Schnittdarstellung.

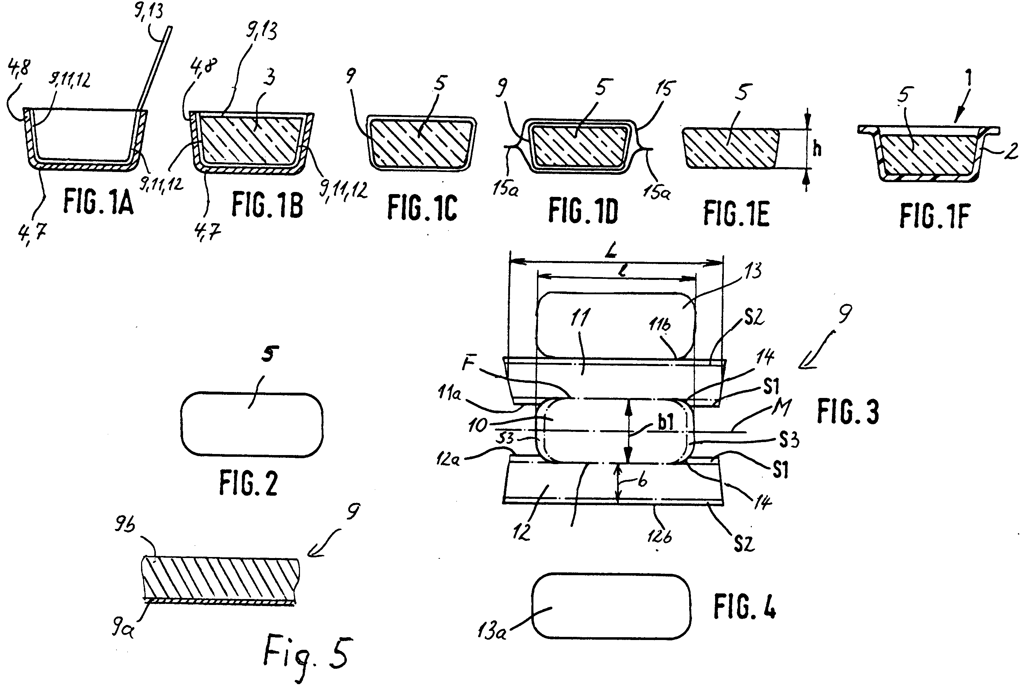

Die Fig. 1A bis 1F zeigen schematisch sechs Verfahrensschritte für die Bereitstellung von Speiseeis an einer Entnahmestelle 1, die durch eine Verkaufswanne 2 aus Metall, insbesondere nichtrostendem Stahl wie V2A, dargestellt ist und zu einem nicht gezeigten Verkaufsstand gehört. Das Verfahren besteht im wesentlichen darin, daß eine flüssige oder teilflüssige Speiseeis-Ausgangsmasse 3 in eine wannenförmige Hohlform 4 eingefüllt wird und durch Gefrieren zu einem Speiseeisblock 5 erstarrt, der nach Entfernung aus der Hohlform 4 zur Entnahmestelle 1 transportiert und dort nach Einlegen in die Verkaufswanne 2 zum Verkauf angeboten wird.

Die Hohlform 4 weist ebenso wie die Verkaufswanne 2 eine in der Draufsicht ovale Form (Fig. 2) sowie eine zum ebenen Hohlformboden 7 hin konvergierende Wandung 8 mit abgerundeten Ecken und ebenso abgerundetem Übergang zum Hohlformboden 7 hin auf.

Um den Speiseeisblock 5 während des Transports zur Entnahmestelle 1 zu schützen, ist eine Umhüllung für denselben vorgesehen, die im Verfahrensschritt 1A vor dem Einfüllen der Ausgangsmasse 3 als Auskleidung 9 in Form eines Zuschnitts in die Hohlform 4 eingelegt wird. Die Auskleidung 9 ist von einem solchen, in Fig. 3 gezeigten Zuschnitt und besteht aus einem wasserfesten und schmiegsamen Flachmaterial mit einer solchen Festigkeit, daß sie faltenfrei in die Hohlform 4 eingelegt werden kann und nach Erstarren der Ausgangsmasse 3 den Speiseeisblock 5 faltenfrei umgibt.

Zu diesem Zweck ist die Auskleidung 9 im vorliegenden Ausführungsbeispiel zweilagig mit einer Innenlage 9a und einer Außenlage 9b ausgebildet. Letztere besteht aus Karton mit einem Gewicht von 350 g/m² und verleiht dadurch sowie durch die Form ihres Zuschnitts der Auskleidung 9 die für ihr faltenfreies Verhalten während des Einlegens in die Hohlform 4 und während des Erstarrens der Ausgangsmasse 3 erforderliche Festigkeit, während die Innenlage 9b als wasserfeste und lebensmittelechte Polyäthylen-Beschichtung des Kartons 9b letzteren gegenüber der Ausgangsmasse 3 bzw. dem Speiseeisblock 5 abschirmt, so daß kein Wasser bzw. Feuchtigkeit durchtreten kann. Die Dicke der Auskleidung 9 beträgt etwa 0,5mm und diejenige der Außenlage 9b etwa 0,45mm.

Fig. 3 zeigt die Form des Zuschnitts der Auskleidung 9, die dazu vorgesehen ist, den Speiseeisblock 5 allseitig geschlossen zu umhüllen. Der Zuschnitt ist einstückig ausgebildet und besteht aus einem dem Hohlraumboden 7 zugeordneten mittleren Zuschnittbereich 10, zwei der Hohlform-Wandung 8 zugeordnete äußere Zuschnittbereiche 11 und 12 sowie einem Deckel-Zuschnittbereich 13. Die Zuschnittbereiche 10 bis 12 sind bzgl. der Längsmittelachse M der Auskleidung 9 symmetrisch ausgebildet.

Die äußeren Zuschnittsbereiche 11, 12 weisen jeweils die Form eines Trapezes auf, dessen kürzere Parallelseiten 11a bzw. 12a mit dem mittleren Zuschnittsbereich 10 verbunden sind. Die längere Parallelseite 11b des äußeren Zuschnittsbereichs 11 ist mit dem Deckel-Zuschnittsbereich 13 verbunden, während die längere Parallelseite 12b des äußeren Zuschnittsbereichs 12 frei d. h. nicht mit dem Deckel-Zuschnittsbereich 13 verbunden ist. Der mittlere Zuschnittsbereich 10 und der Deckel-Zuschnittsbereich 13 weisen eine dem horizontalen Querschnitt der Hohlform 4 entsprechende ovale Form auf.

Die Summe der mittleren Länge L der äußeren Zuschnittsbereiche 11, 12 ist gleich oder etwas größer als der horizontale Innenumfang der Hohlform 4. Die Breite b der äußeren Zuschnittsbereiche 11, 12 entspricht der vorgesehenen Füllhöhe der Ausgangsmasse 3 in der Hohlform 4 bzw. der Höhe h des Speiseeisblocks 5. Sie kann jedoch auch etwas größer sein, so daß sich an den kürzeren Parallelseiten 11a, 12a und/oder an den längeren Parallelseiten 11b, 12b der äußeren Zuschnittsbereiche 11, 12 überstehende Streifenabschnitte S1 bzw. S2 ergeben. Ein Trennschnitt 14 verläuft zwischen den dem mittleren Zuschnittsbereich 10 zugeordneten Endbereichen der kürzeren Streifenabschnitte S1 und einer Linie F, die beim Einlegen des Zuschnitts in die Hohlform 4 im Übergang von der Wandung 8 zum Hohlformboden 7 liegt. Der Trennschnitt 14 weist einen entsprechend dem gerundeten Eckbereich der Hohlform 4 bogenförmigen Verlauf auf.

Die Breite b1 des mittleren Zuschnittsbereichs 10 entspricht der Breite der Hohlform 4, während die Länge 1 der Länge der Hohlform 4 entspricht oder vorzugsweise etwas größer bemessen ist, so daß sich auch hier überstehende Streifenabschnitte S3 ergeben.

Der mittlere Zuschnittsbereich 10 und die äußeren Zuschnittsbereiche 11, 12 sind aufgrund ihrer vorstehend erwähnten Form sowie Längen- und Breitenabmessungen so an die Hohlform-Innenkontur angepaßt, daß sie diese nach dem Einlegen in und Anschmiegen an die Hohlform zumindest bis zur vorgesehenen Einfüllhöhe der Ausgangsmasse 3 bzw. bis zur Höhe h des Speiseeisblocks 5 vollständig ohne Lücken, vorzugsweise mit geringen Überlappungen, abdecken. Der Deckel-Zuschnittsbereich 13 weist ebenso eine solche Form und solche Breiten- und Längenabmessungen auf, daß er nach Einfüllen bzw. Erstarren der Ausgangsmasse 3 deren freie Oberfläche vollständig ohne Lücken, vorzugsweise mit geringen Überlappungen mit den äußeren Zuschnittsbereichen 11, 12 abdeckt.

Die einzelnen Verfahrensschritte sind nachstehend beschrieben. Im Verfahrensschritt 1A werden die Zuschnittsbereiche 10 bis 12 in die Hohlform 4 so eingelegt, daß sie faltenfrei deren Innenkontur folgen, d.h. im wesentlichen am Hohlformboden 7 und der Hohlform-Wandung 8 anliegen.

Im Verfahrensschritt 1B wird die Speiseeis-Ausgangsmasse 3 bis zur vorgesehenen Füllhöhe in die ausgekleidete Hohlform 4 eingefüllt, wobei sie die Zuschnittsbereiche 10 bis 12 faltenfrei vollständig an den Hohlformboden 7 und die Hohlform-Wandung 8 anschmiegt. Sodann wird der Deckel-Zuschnittsbereich 13 auf die freie Oberfläche der Ausgangsmasse 3 aufgelegt und leicht an diese angepreßt. Anschließend wird die ausgekleidete und gefüllte Hohlform 4 mittels eines nicht gezeigten Transportbandes durch einen ebenfalls nicht gezeigten Tunnelgefrierer hindurchtransportiert, in welchem die Ausgangsmasse 3 durch Gefrieren zum Speiseeisblock 5 erstarrt.

Im Verfahrensschritt 1C wird der mit der Auskleidung 9 allseits vollständig umhüllte Speiseeisblock 5 aus der Hohlform 4 durch Stürzen derselben entfernt, wobei er sich leicht von dieser ablöst, und zwar aufgrund des konischen Verlaufs der Hohlform-Wandung 8 sowie der geringen Haftung zur Karton-Außenlage 9b, die durch die Polyäthylen-Innenlage 9a vor Wasser bzw. Feuchtigkeit geschützt ist, das aus der Ausgangsmasse 3 bzw. dem Speiseeisblock 5 austreten könnte.

Im Verfahrensschritt 1D wird der von der Auskleidung 9 umhüllte Speiseeisblock 5 mit einer Verpackung 15 versehen, die einen zusätzlichen Transportschutz darstellt, und in Form eines Kartons oder einer Schlauchverpackung ausgebildet sein kann, deren Verpackungsenden mittels einer Flossennaht 15a geschlossen werden. Der auf diese Weise zusätzlich verpackte Speiseeisblock 5 wird nun nach Zwischenlagerung, falls eine solche erforderlich ist, zur Entnahmestelle 1 transportiert.

Hier werden im Verfahrensschritt 1E die Verpackung 15 sowie die Auskleidung 9 vom Speiseeisblock 5 entfernt, vorzugsweise durch Auf- und Abreißen. Die Reißfestigkeit der Auskleidung 9 ist aufgrund der Karton-Außenlage 9b größer als die Haftung zum Speiseeisblock 5.

Im Verfahrensschritt 1F wird nun der von der Auskleidung 9 befreite Speiseeisblock 5 passend in die Verkaufswanne 2 eingesetzt und zum Verkauf angeboten. Dabei können die einzelnen Eisportionen aufgrund der abgerundeten Hohlform-Ecken und des abgerundeten Übergangs vom Hohlformboden 7 zur Hohlform-Wandung 8 ohne Schwierigkeiten aus der Verkaufswanne 2 entfernt und diese somit vollständig geleert werden.

Fig. 4 zeigt einen Deckelzuschnittsbereich 13a, der gemäß dem zweiten bevorzugten Ausführungsbeispiel separat von den Zuschnittsbereichen 10 bis 12 ausgebildet ist, im übrigen jedoch gleiche Form und Abmessungen wie der Deckelzuschnittsbereich 13 nach Fig. 3 aufweist und in gleicher Weise auf die freie Oberfläche der Ausgangsmasse 3 aufgelegt und an diese angedrückt wird.

## Patentansprüche

1. Umhüllung für einen Speiseeisblock, der in Form einer flüssigen oder teilflüssigen Ausgangsmasse in eine Hohlform eingefüllt und durch Gefrieren zur Blockform erstarrt ist, **gekennzeichnet durch** eine Auskleidung (9) für die Hohlform (4) mit einem solchen Zuschnitt und bestehend aus einem schmiegsamen und wasserfesten Flachmaterial mit einer solchen Festigkeit, daß sie in die Hohlform (4) faltenfrei einlegbar ist und nach dem Erstarren der Ausgangsmasse (3) den Speiseeisblock (5) faltenfrei umhüllt.

2. Umhüllung nach Anspruch 1, **dadurch gekennzeichnet, daß** die Auskleidung (9) einlagig ist.

3. Umhüllung nach Anspruch 2, **dadurch gekennzeichnet, daß** die Auskleidung (9) aus Kunststoff- Folienmaterial oder Papier, wie etwa Wachs- oder Perlwachspapier, hergestellt ist.

4. Umhüllung nach Anspruch 1, **dadurch gekennzeichnet, daß** die Auskleidung (9) mehrlagig ist und wenigsten aus einer wasserfesten Innenlage (9a) sowie einer festigkeitsgebenden Außenlage (9b) besteht.

5. Umhüllung nach Anspruch 4, **dadurch gekennzeichnet, daß** die Innenlage (9a) aus Polyäthylen und die Außenlage (9b) aus Karton oder Pappe besteht.

6. Umhüllung nach Anspruch 4 oder 5, **dadurch gekennzeichnet, daß** die Innenlage (9a) als Beschichtung der Außenlage (9b) ausgebildet ist.

7. Umhüllung nach wenigstens einem vorhergehenden Anspruch, **dadurch gekennzeichnet, daß** die für den Kontakt mit der Ausgangsmasse (3) bzw. dem Speiseeisblock (5) vorgesehene Seite der Auskleidung (9) glatt ist.

8. Umhüllung nach wenigstens einem vorhergehenden Anspruch, **dadurch gekennzeichnet, daß** die Auskleidung (9) ein Gewicht im Bereich von etwa 250 g/m² bis etwa 450 g/m² aufweist.

9. Umhüllung nach wenigstens einem vorhergehenden Anspruch, **dadurch gekennzeichnet, daß** die Auskleidung (9) eine Dicke im Bereich von etwa 0,35mm bis etwa 0,65mm aufweist.

10. Umhüllung nach wenigstens einem der Ansprüche 4 bis 9, **dadurch gekennzeichnet daß** die Innenlage (9a) eine Dicke im Bereich von etwa 0,03mm bis etwa 1,0mm aufweist.

11. Umhüllung nach wenigstens einem vorhergehenden Anspruch, **dadurch gekennzeichnet,** daß die Auskleidung (9) als einstückiger Zuschnitt ausgebildet ist.

12. Umhüllung nach wenigstens einem vorhergehenden Anspruch, **dadurch gekennzeichnet, daß** der Zuschnitt einen mittleren (10) und zwei äußere Zuschnittsbereiche (11, 12) umfaßt, die in der Form eines H angeordnet sind.

13. Umhüllung nach Anspruch 12, **dadurch gekennzeichnet, daß** die Breite (b1)und die Länge (1) des mittleren Zuschnittbereichs (10) etwa gleich der Innenbreite bzw. etwa gleich der oder größer als die Innenlänge der Hohlform (4) ist, daß die Summe der Länge (L) der äußeren Zuschnittbereiche (11 ,12) etwa gleich dem oder größer als der horizontale Innenumfang der Hohlform (4) ist, und daß die Breite (b) der äußeren Zuschnittbereiche (11, 12) etwa der Füllhöhe in der Hohlform (4) entspricht oder etwas größer bemessen ist.

14. Umhüllung nach wenigstens einem vorhergehenden Anspruch, **dadurch gekennzeichnet, daß** der Zuschnitt bzgl. seiner Längsmittelachse (M) und/oder Quermittelachse eine symmetrische Form aufweist.

15. Umhüllung nach wenigstens einem vorhergehenden Anspruch, **dadurch gekennzeichnet, daß** die Auskleidung (9) den Speiseeisblock allseits umhüllt.

16. Umhüllung nach wenigstens einem vorhergehenden Anspruch, **dadurch gekennzeichnet, daß** der Zuschnitt einen Deckelzuschnittsbereich (13) zur Abdeckung der Oberseite der Ausgangsmasse (3) in der Hohlform (4) oder des Speiseeisblocks (5) umfaßt, der in Form und Größe an die horizontale Querschnittsform und -größe der Hohlform (4) angepaßt oder bzgl. seiner Länge und/oder Breite etwas größer bemessen ist.

17. Umhüllung nach Anspruch 16, **dadurch gekennzeichnet, daß** der Deckelzuschnittsbereich (13) einstückig mit dem Zuschnitt oder als separates Teil (13a) hergestellt ist.

18. Verfahren zum Bereitstellen von Speiseeis an einer Entnahmestelle zur Entnahme von Eisportionen, bei dem eine flüssige oder teilflüssige Ausgangsmasse in eine Hohlform eingefüllt und durch Gefrieren zu einem Speiseeisblock geformt, sodann zur Entnahmestelle transportiert und an dieser in eine Verkaufswanne eingesetzt wird, **dadurch gekennzeichnet, daß** vor dem Einfüllen der Ausgangsmasse (3) in die Hohlform (4)eine Auskleidung (9) eingebracht wird, die einen solchen Zuschnitt aufweist und aus einem schmiegsamen und wasserfesten Flachmaterial solcher Festigkeit besteht, daß sie sich beim Einfüllen der Ausgangsmasse (3) faltenfrei der Kontur der Hohlform (4) anschmiegt und während des Erstarrens der Ausgangsmasse (3) ihre Form sowie Lage beibehält, so daß sie den Speiseeisblock (5) faltenfrei umhüllt, daß der Speiseeisblock (5) mit der Auskleidung (9) aus der Hohlform (4) entfernt und zur Entnahmestelle (1) transportiert wird, daß im Bereich der Entnahmestelle (1) die Auskleidung (9) vom Speiseeisblock (5) entfernt und dieser zum Verkauf, vorzugsweise in einer Verkaufswanne (2), angeboten wird.

19. Verfahren nach Anspruch 18, **dadurch gekennzeichnet, daß** auf die Ausgangsmasse (3) vor, während oder nach ihrem Erstarren ein mit dem Auskleidungszuschnitt (9) einstückig ausgebildeter Deckelzuschnittsbereich (13) bzw. ein separat ausgebildeter Deckelteil (13a) aufgelegt und die Auskleidung (9) allseits geschlossen wird.

20. Verfahren nach Anspruch 18 oder 19, **dadurch gekennzeichnet, daß** der Speiseeisblock (5) gemeinsam mit der Auskleidung (9) für den Transport in einer Verpackung (15) verpackt wird.
